Europäisches Patentamt

European Patent Office

Office européen des brevets

(19)

(11) Publication number: **0 002 554**
**B1**

(12) **EUROPEAN PATENT SPECIFICATION**

(45) Date of publication of patent specification: **07.10.81**

(51) Int. Cl.³: **A 22 C 21/00**

(21) Application number: **78200345.3**

(22) Date of filing: **04.12.78**

(54) Device for handling fowl.

(30) Priority: **09.12.77 NL 7713640**

(43) Date of publication of application:
**27.06.79 Bulletin 79/13**

(45) Publication of the grant of the European patent:
**07.10.81 Bulletin 81/40**

(84) Designated Contracting States:
**BE CH DE FR GB SE**

(56) References cited:
**NL - A - 74 10087**

(73) Proprietor: **Moba Holding Barneveld B.V.**
**Stationsweg 117**
**NL-3771 VE Barneveld (NL)**

(72) Inventor: **van Brummelen, Johannes**
**Gasthuisstraat 15**
**Barneveld (NL)**

(74) Representative: **de Wit, Gerard Frederik, Ir.**
**Breitnerlaan 146**
**NL-2596 HG Den Haag (NL)**

Courier Press, Leamington Spa, England.

## Device for handling fowl

The invention relates to a device for handling fowl provided with an attaching means for each of the legs of a fowl. Such a device is known from the Dutch Patent Application 74.10087.

In many cases it is desired to have such a device not activated or to have it carry out a working cycle differing from the normal one, if the fowl is not in the right way attached to the attaching means. The latter fact can induce a wrong working or break downs. More specifically difficulties may arise in case only one leg is attached to the attaching means or in case no fowl leg at all is attached to the attaching means.

The invention aims to provide a solution for these difficulties, which on the one hand is extremely simple and on the other hand prevents work disturbances.

Therefore according to the invention it is provided that for each of the two attaching means a feeler is present, that is movable between a first position in which part of the feeler is in the space occupied by the leg attached in the related attaching means and a second position in which no part of the feeler is in the space occupied by the said leg, each of said feelers when in the said first position, prevents the normal activation of the device and allows this normal activation when in its said second position.

In principle the invention can be realized in many ways, for instance by having the feelers control electrical switches or activate blocking- or decoupling members. Also it is applicable to a non-movable device as well as to devices movable along a track.

In order to prevent that when bringing a fowl leg at the location covered by a feeler in its first position, this feeler impedes the right positioning of the leg, it is provided according to a further elaboration of the invention, that means are present to positively move each feeler to its second position, said feelers being mechanically biased towards their first position, the said means being movable from a first position, in which it allows both feelers to be in said first position of the feelers, to a second position in which it allows the feelers to move from their second positions to their first positions.

Though for using of the invention it is only necessary that an attaching means defines location where a fowl leg can cooperate with a feeler, an important application of the invention is the handling of fowl by suspending it by its knee joints. In that instance a further elaboration of the invention provides, that the attaching means form a double hook having two hook parts each of said hook parts being adapted to receive the knee joint of a fowl and to cooperate with a feeler.

The invention in the following is elucidated by means of the accompanying drawing, in which:

Fig. 1 is a frontal view of an embodiment of the invention;

Fig. 2 is a side view of the device of fig. 1;

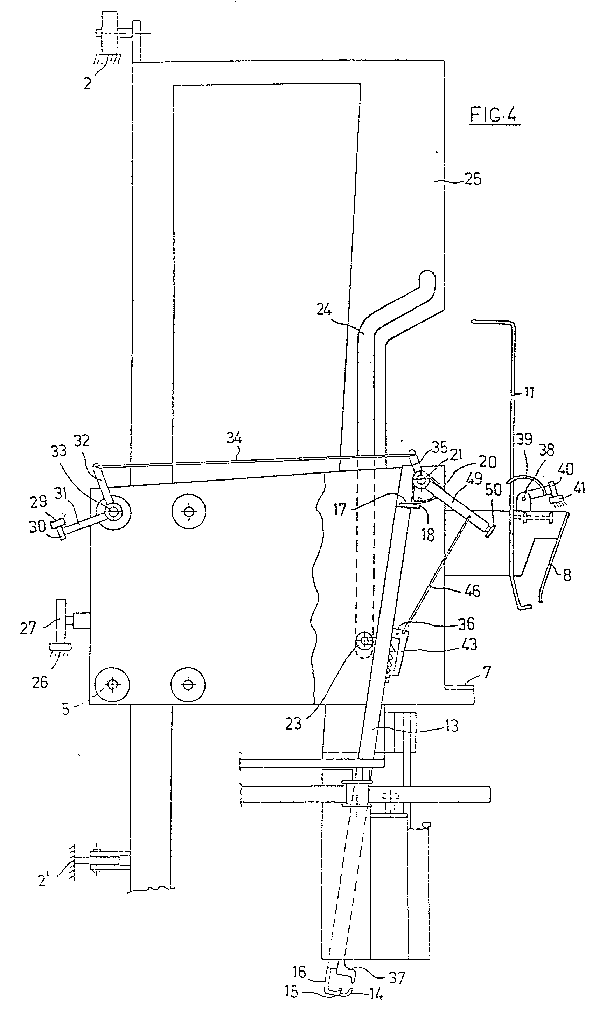

Fig. 3 corresponds to fig. 1 in an other working position of the device;

Fig. 4 shows a side view of the device in the position of fig. 3; and

Fig. 5 shows a chart of control members along the track of the device.

In the drawing reference 1 indicates a frame, that by means of wheels can be moved along a track schematically indicated with 2 and 2' in the direction of the arrow 3.

The frame 1 is provided with vertical rails 4, along which by means of wheels 5 a sub frame 6 can move vertically.

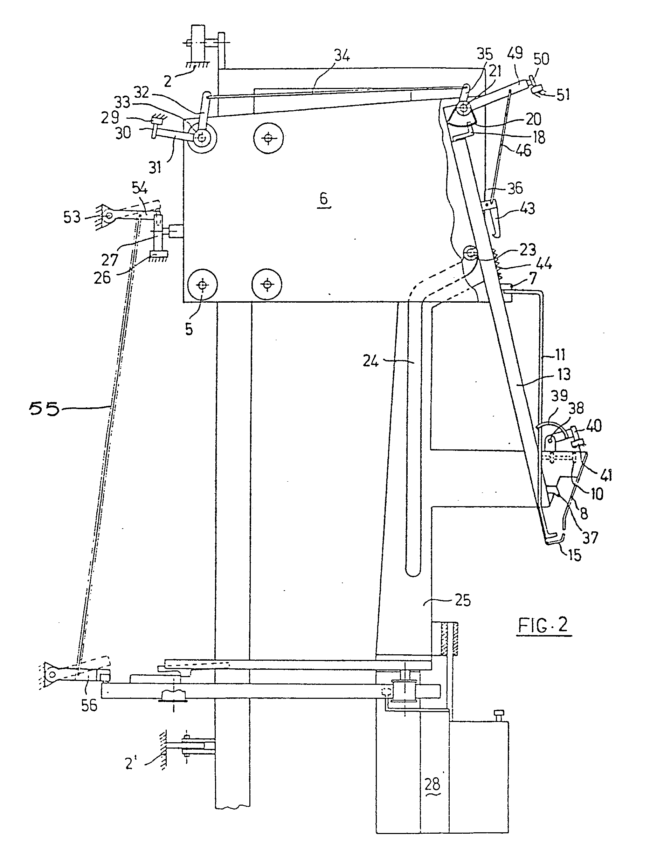

The sub frame 6 is provided with abutments 7. A sheet 8 having slits 9 is mounted to the frame 1. Further the sheet 8 bears pivot pins 10 on which feelers 11 are pivotable supported, which feelers by means of springs 12 are urged towards a first position shown with solid lines, by reason of which they engage with their horizontally extending ends (see fig. 2) the abutments 7 and prevent that the sub frame 6 can move downwardly with respect to the frame 1. The sub frame 6 supports a bar 13, which at its lower end has a fixed finger 14 and two pivotable fingers 15, which together form a double hook. Each pivotable finger 15 forms together with the fixed finger 14 a hook part, that can receive the knee joint of a fowl.

The pivotable fingers 15 are connected to bars 16, which are pivotable about their longitudinal axis within the bar 13 and at their upper end are provided with arms 17 to the end of which sliding pins 18 are mounted, which protrude in control slits (not shown) in a plate segment 20, which is rotatable about a shaft 21 that is supported by the sub frame 6 and to which the bar 13 pivotably is mounted.

To the bar 13 further a follow roll 23 is mounted, which runs in a slit 24, which has been applied in a sheet 25, which is fixedly connected to the frame 1.

The sub frame 6 is provided with a follow roll 27, which is supported by a control guide 26 mounted along the track 2.

Along the track 2 further a guide 29 is mounted under which a follow roll 30 runs, which is connected to an arm 31. This arm forms together with an arm 32 a hooked arm, that is pivotable about a shaft 33. To the arm 32 a link 34 is connected, which is connected to an arm 35, which fixedly is connected with the plate segment 20. When the guide 29 declines downwardly the hooked arm 31, 32 is rotated counterclockwise, the link 34 is pulled towards the left and the plate segment 20 is rotated counter-clockwise, by reason of which the slide pins 18 in the non-shown control slits of this segment slide and the bars 16 are rotated about their axes, so that the fingers 15 can pivot away from the fixed finger 14.

Further a plate 39 is pivotable about a shaft 38, that is mounted to frame 1. The plate 39 has inclined edge parts 39' and can be pivoted by means of a follow roll 40, that can cooperate with a further guide 41 mounted along track 2.

Above the fingers 14, 15 which form a double hook a clamping member 37 is mounted, which via a rod slidable within the bar 13 is connected to a member 36 to which a ratchet 43 is pivotably mounted. This ratchet can engage a rack 44 that fixedly is connected to the bar 13. Further the ratchet is by means of a link 46 connected to a frame 49 that is pivotable about the shaft 21 and that supports a follow roll 50, which can cooperate with a guide 51 mounted along the track 2.

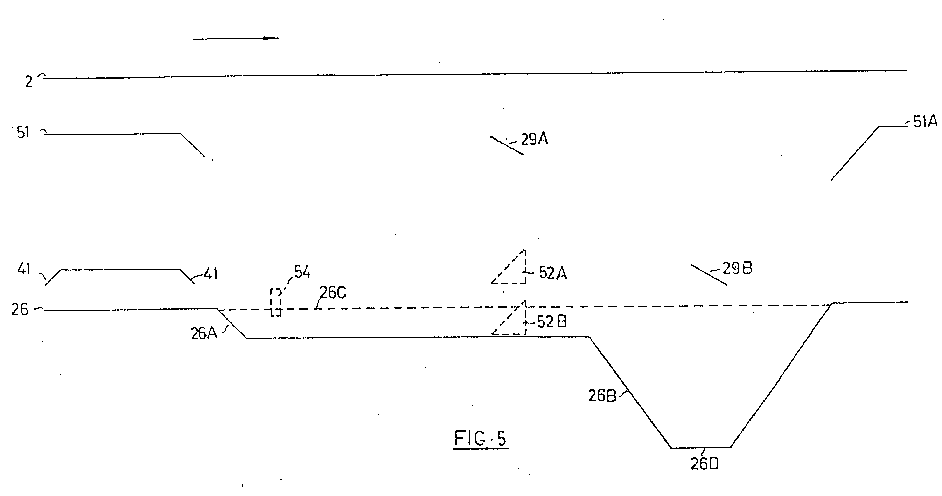

In fig. 2 an additional feature of the invention is shown, using the fact that when the sub frame 6 is supported by one of the two feelers it is at a level where it can activate further control means. The latter is schematically indicated and consists of an arm 54 pivotable at a fixed point 53 and connected to a rod 55, that is connected to a control member 56, that in a way not being part of this invention controls the activation of the modelling apparatus 28. In fig. 2 the guide 26 is shown at the level it has at the beginning of track 2. At the location of arm 54, also indicated in fig. 5, the level of guide 26 is lower than shown in fig. 2, so that with normal working of the device, if also the feelers do not support sub frame 6, roll 27 will not cooperate with arm 54.

Fig. 5 shows schematically the height position of the guides mounted along track 2. Guide 51 has a horizontal part, followed by a declining part, a rather long interruption and at the end of track 2 an inclining part, followed by a horizontal part 51A.

Guide 41 is only present in the first part of track 2 and has an inclining, a horizontal and a declining part.

Guide 29 is present at two different locations and different levels, and is in fig. 5 indicated with 29A and 29B. Both guide parts 29A and 29B are declining.

Guide 26 has first a horizontal part, secondly a declining part 26A, a further horizontal part, a declining part 26B, a third horizontal part 26D, an inclining part and finally again a horizontal part.

The working of the above described device in the following is elucidated by hand of fig. 5, in which the different guides at their location along the track 2 are indicated. For clarifying purposes several of the guides are indicated with A or B as index to indicate certain guide parts.

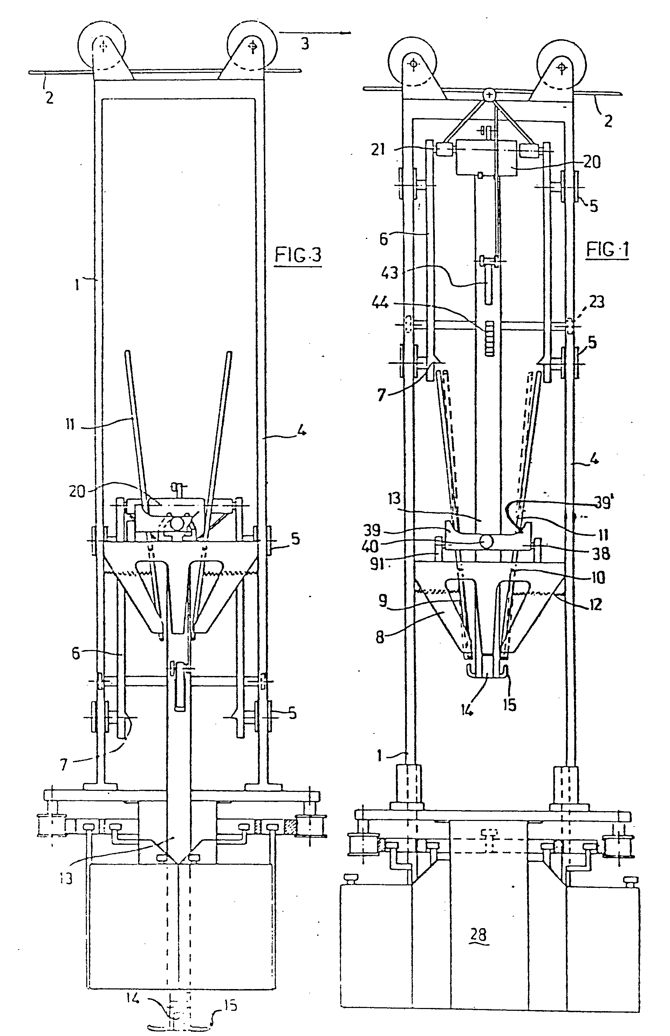

At the beginning of the working of the device the guide 26 supports by means of follow roll 27 the sub frame 6 on the level shown in fig. 1 and 2. Therewith the guide 51 causes the ratchet 43 to be in the position shown in fig. 1 and 2 so that it cannot engage the rack 44. The feelers are their first position shown in solid lines in fig. 1.

Immediately at the beginning of the track 2 guide 41 inclines somewhat. By reason of this the control plate 39 is pivoted via roll 40, so that the feelers 11 come into their second position shown in dotted lines in fig. 1. Following this, the legs of a fowl are put into the hook parts formed by fingers 14, 15 by inserting the legs through the recesses 9 in sheet 8 and moving them downwardly until their knee joints are located in the hook parts.

After this there is a part in which the guide 41 declines downwardly, so that control plate 39 is rotated back and the feelers 11 get the possibility, by reason of the oblique edges 39' of the control plate 39 to reach the position shown in fig. 1 with solid lines. This movement of each feeler from the position shown in dotted lines to the position shown in solid lines is caused by springs 12. If, however, a knee joint of a fowl is present in the related hook part 14, 15, this movement is impeded and the feeler cannot reach the position shown in solid lines. This means that, when no or only one knee joint is present in the hook parts formed by the fingers 14, 15 either both feelers or one of the feelers will be in the position indicated in fig. 1 with solid lines.

Following to this the guide 26 has a downwardly declining part 26A. When the feelers 11 are in the position indicated with dotted lines the normal working occurs and the sub frame 6 moves somewhat downwardly. If contrary to this at least one feeler is in the position indicated with solid lines, then the sub frame carries out a movement corresponding with the interrupted line 26C of fig. 5.

The guide 29A has been applied at such a level, that in the latter case cooperation between this guide and the follow roll 30 occurs by reason of which via 31, 32, 34, 35, 20, 18, 17 and 16 the fingers 15 are pivoted and the fowl is dropped.

Then the sub frame 6 remains at the level of the interrupted line 26C. At the end of the working cycle the follow roll 27 engages the guide 26 at the location at the right side of fig. 5 where it has the same level as at the left side.

With the normal working of the device the sub frame 6 moves by reason of part 26B of guide 26 downwardly, with which the fowl is brought into a schematically indicated modelling apparatus 28, whereas at the guide part 26D opening of the fingers 14, 15 occurs under influence of guide part 29B.

Though not a feature of the invention, it is indicated, that at the declining part of guide 51 clamping member 37 via link 46 and member 36 is lowered and beyond the end of the declining part of guide 51 even falls down, until the clamping member engages the knee joints of the fowl, suspended in the hook parts 14, 15. Then the ratchet engages rack 44 and upward movement of clamping member 37 is impeded. At the end of track 2 guide 51 has an inclining part, lifting follow roll 50, so that ratchet 43 is rotated counterclockwise disengages from rack 44 and lifts clamping member 37.

Following to this part 51A of guide 51 becomes active and the ratchet 43 is pivoted away from the teeth of the rack 44 and moved upwardly towards its initial position.

In fig. 5 an inclining cam member 52 has been indicated in two positions, to wit an inactive position 52A and an active position 52B. The activation of the member 52 to displace it from the inactive position 52A into the active position 52B can for instance be carried out by hand if for any reason a fowl suspended in the hook has not to be normally handled or automatically if for any reason normal handling of the fowl is not desired.

The cam member 52 has the advantage, that the feelers 11 fulfil an additional function, because the sub frame is lifted by it to such a level, that the feelers 11 can locate themselves below the abutments 7, whereas the member 52 further lifts the sub frame efficiently to let it cooperate with the guide part 29A for dropping any fowl present. After dropping the fowl both feelers will take the position shown in solid lines and support the sub frame 6, so that sub frame 6 remains at the level indicated by the interrupted line 26C.

A further additional use of the feelers, which when they are active define the level of the sub frame 6, is schematically indicated in fig. 2.

If namely the sub frame 6 is supported by the feelers, the follow roll 27 will be at a level, that differs from the level in which this follow roll 27 cooperates with the lowered parts of the guide 26, such as 26A, 26B, 26D. This has been used by letting the roll 27 lift an arm 54 that is pivotable at 53, which arm by means of a rod 55 is coupled to a control member 56 for a modelling apparatus 28, that is not further described, for instance for letting this apparatus not become active, if the feelers support the sub frame 6. In fif. 5 the location along the track 2, of the arm 54 has been indicated.

## Claims

1. Device for handling fowl provided with an attaching means (14, 15) for each of the legs of a fowl, characterized in that for each of the two attaching means a feeler (11) is present, that is movable between a first position in which part of the feeler is in the space occupied by the leg attached in the related attaching means and a second position in which no part of the feeler is in the space occupied by the said leg, each of said feelers when in the said first position, prevents the normal activation of the device and, allows this normal activation when in its said second position.

2. Device according to claim 1, characterized in that means (38, 39, 40, 41) are present to positively move each feeler to its second position, said feelers being mechanically biased towards their first position, the said means (38, 39, 40, 41) being movable from a first position, in which it allows both feelers to be in said first position of the feelers, to a second position in which it allows the feelers to move from their second positions to their first positions.

3. Device according to claim 1 or 2, characterized in that the attaching means (14, 15) form a double hook having two hook parts each of said hook parts being adapted to receive the knee joint of a fowl and to cooperate with a feeler.

## Revendications

1. Dispositif pour le traitement de la volaille, muni d'un moyen de fixation (14, 15) pour chacune des pattes d'une volaille, caractérisé par le fait que pour chacun des deux moyens de fixation un palpeur (11) est présent, qui est mobile entre un première position, dans laquelle une partie du palpeur est dans l'espace occupé par la patte attachée dans le moyen de fixation correspondant et une seconde position, dans laquelle aucune partie du palpeur ne se trouve dans l'espace occupé par cette patte, chacun de ces deux palpeurs, lorsqu'il est dans la première position, empêche l'actionnement normal du dispositif et permet l'actionnement normal lorsqu'il est dans la seconde position.

2. Dispositif selon la revendication 1, caractérisé par le fait que des moyens (38, 39, 40, 41) sont présents pour déplacer positivement chaque palpeur vers sa seconde position, ces palpeurs étant mécaniquement déviés vers leur première position, ces moyens (38, 39, 40, 41) étant mobiles d'une première position, dans laquelle ils permettent aux deux palpeurs d'être dans cette première position des palpeurs, vers une seconde position, dans laquelle ils permettent aux palpeurs de se déplacer de leurs secondes positions vers leurs premières positions.

3. Dispositif selon la revendication 1 ou 2, caractérisé par le fait que les moyens de fixation (14, 15) forment une double crochet ayant parties de crochet, chacune de ces parties de crochet étant adaptée pour recevoir la jointure du genou d'une volaille et pour coopérer avec un palpeur.

## Patentansprüche

1. Vorrichtung zum Behandlen vom Geflügel, versehen mit einem Befestigungsmittel (14, 15) für jedes Geflügelbein dadurch gekennzeichnet, dass für jedes der zwei Befestigungsmittel ein Fühler (11) anwesend ist, der bewegbar ist zwischen einer ersten Lage in welcher ein Teil des Fühlers in dem Raum ist der beschlagnahmt wird durch das im diesbezüglichen Befestigungsmittel befestigten Bein und einer zweiten Lage, in welcher kein Teil des Fühlers in dem von genannten Bein beschlagnahmten Raum, wobei jede der Fühler in der ersten Lage die normale Wirkung der Vorrichtung verhindert und diese normale Wirkung gestattet wenn er in der genannten zweiten Lage ist.

2. Vorrichtung nach Anspruch 1, dadurch gekennzeichnet, dass ein Mittel (38, 39, 40, 41) anwesend ist um jeden Fühler in seine zweite Lage zu bewegen, wobei die Fühler mechanisch vorgespannt sind zu ihren ersten Lage hin, welches Mittel (38, 39, 40, 41) bewegbar ist von einer ersten Lage, in welcher es den beiden Fühlern gestattet in der ersten Lage der Fühler zu sein, zu einer zweiten Lage in welcher es den Fühlern gestattet von ihren zweiten Lage in ihre erste Lage zu bewegen.

3. Vorrichtung nach Anspruch 1 oder 2, dadurch gekenzeichnet, dass die Befestigungsmittel (14, 15) einen doppelten Haken bilden mit zwei Hakenteilen wobei jedes Hakenteil geeignet ist das Kniegelenk eines Geflügels zu empfangen und mit einem Fühler zusammen zu arbeiten.

FIG·3

FIG·1

FIG·2

FIG·4

FIG. 5